# EUROPÄISCHE PATENTSCHRIFT

(11) **EP 3 563 989 B1**
(45) Veröffentlichungstag und Bekanntmachung des Hinweises auf die Patenterteilung: **24.02.2021**
(21) Anmeldenummer: 19000202.2
(22) Anmeldetag: 29.04.2019
(51) Int. Cl.: B25J 15/02, B25J 19/00

(54) **GREIFVORRICHTUNG MIT SCHMIERTECHNISCH OPTIMIERTEN SCHLITTEN**
GRIPPING DEVICE WITH CARRIAGE OPTIMISED FOR LUBRICATION
DISPOSITIF DE PRÉHENSION POURVU DE COULIS SEAU À TECHNIQUE DE LUBRIFICATION OPTIMISÉE

(30) Priorität: 30.04.2018 DE 102018003489
(43) Veröffentlichungstag der Anmeldung: 06.11.2019
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- DE-B4-102015 004 404
- GB-A- 1 537 782
- US-A- 5 967 581

## Beschreibung

Die Erfindung betrifft eine Greifvorrichtung mit bewegliche Greifelemente tragenden Schlitten, wobei die Schlitten in Greifrichtung der Greifelemente hintereinander in einer in einem Grundkörper angeordneten, zu den Greifelementen hin zumindest bereichsweise offenen Führungsnut parallel zur Greifrichtung - zwischen einer Öffnungs- und Schließstellung - über ein Stellglied antreibbar geführt und quer zur Greifrichtung allseitig abstützend gelagert sind.

Aus der DE 10 2015 004 404 B4 ist eine Präzisionsgreifvorrichtung bekannt, bei der in einem Gehäuse Greifelemente tragende Schlitten über ein Doppelschiebekeilglied angelenkt werden. Das Doppelschiebekeilglied wird durch ein pneumatisches Stellglied angetrieben.

Der vorliegenden Erfindung liegt die Problemstellung zugrunde, eine Greifvorrichtung zu entwickeln, bei der der Gleitwiderstand der Schlittenführung und der Schlittenanlenkung durch eine Optimierung des tribologischen Systems verringert wird.

Diese Problemstellung wird mit den Merkmalen des Patentanspruchs 1 gelöst. Zwischen den Schlitten ist ein diese kuppelndes Doppelschiebekeilglied angeordnet, das senkrecht zur Greifrichtung verfahrbar an einem beweglichen Teil des Stellglieds angelenkt ist. Die Führungsnut weist im Nutgrund pro Schlitten eine plane, feinbearbeitete Dichtzone auf. An jedem Schlitten ist an dessen Unterseite eine Dichtleiste angeordnet, die die Arbeitsfuge zwischen dem jeweiligen Schlitten und der Führungsnut abdichtet. Jeder Schlitten hat zwei Schlittenführungsnuten mit je zwei Führungsflanken. Jede Führungsflanke weist in den stirnseitigen Endbereichen des einzelnen Schlittens Auflauframpen auf, die jeweils - zwischen dem einzelnen Schlitten und den Schlittenführungsschienen des Gehäuses - einen sich zu den Schlittenstirnseiten hin verbreiternden Keilspalt bereitstellen.

Die Greifelemente tragenden Schlitten werden im Ausführungsbeispiel mithilfe einer druckluftbetriebenen Zylinder-Kolben-Einheit als Stellglied in ihrer Führungsnut bewegt. Die Kolbenstange der Zylinder-Kolben-Einheit wirkt hierbei direkt auf ein Doppelschiebekeilglied, das Teil eines Doppelschiebekeil- bzw. Doppelkeilhakengetriebes ist. Innerhalb des Getriebes wird die Hubbewegung der Kolbenstange in eine z.B. um 90 Winkelgrade gekippte Greif- oder Lösebewegung umgelenkt. Für den Fall, dass der Keilwinkel des Doppelschiebekeilgetriebes ungleich 45 Winkelgrade ist, findet neben der Richtungsumlenkung auch eine Über- oder Untersetzung statt.

Bei der aus den Figuren bekannten Greifvorrichtungvariante bewegen sich die Schlitten beim Greifen eines Werkstücks aufeinander zu. Dabei komprimieren die Schlitten die im Keilgetrieberaum eingeschlossene Luft. Zum Ablegen des Werkstücks fahren die Schlitten auseinander, wodurch im Keilgetrieberaum ein Unterdruck entsteht. Da nun der Keilgetrieberaum gegenüber der Umgebung mit den Führungsnutdichtungen der Schlitten und einer Gehäuseabdeckung weitgehend abgedichtet ist, bleibt nur noch in der Arbeitsnebenfuge ein zwischen den Schlittenunterseiten und dem Nutgrund der Führungsnut gelegener schmaler Spalt übrig, über den die Hubbewegung der Schlitten Umgebungsluft zwischen Gehäuse und Umgebung hin und her fördert.

Durch den im Spalt vorhandenen Luftstrom werden zum einen pro Hub geringfügige Mengen Schmiermittel nach außen gefördert und zum anderen Staub und andere Schmutzpartikel der Umgebung in den Keilgetrieberaum eingesaugt. Um das zu vermeiden, wird in der Arbeitsnebenfuge eine Dichtleiste eingebaut. Im Ausführungsbeispiel wird dazu die Dichtleiste jeweils nur beispielhaft an der Unterseite der Schlitten befestigt. Die Dichtleiste hält somit das Schmiermittel wirksam im Keilgetrieberaum zurück. In die Arbeitsnebenfuge gelangtes Schmiermittel wird großteils zurückgefördert. Alternativ kann die Dichtleiste auch im Nutgrund der Führungsnut gelagert sein.

Des weiteren haben die Schlitten im vorderen, dem Keilgetrieberaum zugewandten Bereich, Führungsflankenausläufe, die mit Auflauframpen für das Schmiermittel ausgestattet sind. Die Auflauframpen quetschen beim Hub der Schlitten das im Bereich vor den Schlitten abgelagerte Schmiermittel in die Arbeitsfugen zurück anstatt es nur zu verdrängen.

Als Stellglieder können auch elektromechanische, elektromagnetische, piezoelektrische und auf Formgedächtniselementen basierende Antriebe verwendet werden.

Im Ausführungsbeispiel werden nur Teile von Parallelgreifern gezeigt. Selbstverständlich können die meisten Teile - mit Ausnahme des Gehäuses - auch für Drei-, Vier- und Mehrbacken-, Mehrschlitten- oder Zentrischgreifer verwendet werden, sodass die dargestellte Problemlösung auch dort eingesetzt werden kann. Bei Drei-, Vier- oder Mehrbackengreifern werden in den beispielsweise sternförmig oder parallel angeordneten Führungsnuten pro Nut in der Regel zwei Schlittenführungsschienen vorgesehen. Es ist aber auch möglich, pro Führungsnut nur eine, drei oder mehrere einzelne Schlittenführungsschienen einzubauen.

Weitere Einzelheiten der Erfindung ergeben sich aus den Unteransprüchen und der nachfolgenden Beschreibung schematisch dargestellter Ausführungsformen.
- Figur 1:: perspektivische Ansicht eines Parallelgreifers;
- Figur 2:: perspektivische Ansicht eines Gehäuses;
- Figur 3:: Längsschnitt durch den Parallelgreifer nach Figur 1, jedoch mit Greifbacken; der rechte Greifbacken ist geöffnet;
- Figur 4:: mittiger Querschnitt durch den Parallelgreifer;
- Figur 5:: perspektivische Ansicht eines Schlittens von schräg oben;
- Figur 6:: perspektivische Ansicht eines Schlittens von schräg unten;
- Figur 7:: Seitenansicht des Doppelschiebekeilglieds mit in einem T-Nutstein eingezeichneten Querschnitt;
- Figur 8:: Draufsicht auf das Doppelschiebekeilglied;
- Figur 9:: Seitenansicht des Doppelschiebekeilglieds;
- Figur 10:: Unteransicht des Doppelschiebekeilglieds;
- Figur 11:: Seitenansicht eines Schlittens;
- Figur 12:: vergrößerter Ausschnitt zu Figur 1;
- Figur 13:: perspektivische Ansicht einer Dichtleiste mit zwei Dichtlippen;
- Figur 14:: perspektivische Ansicht einer Dichtleiste mit zwei Dichtlippen und zwei Stirndichtlippen;
- Figur 15:: perspektivische Ansicht einer Dichtleiste mit Quadringquerschnitt;
- Figur 16:: Dichtleiste nach Figur 15 mit zwei Stirndichtlippen.

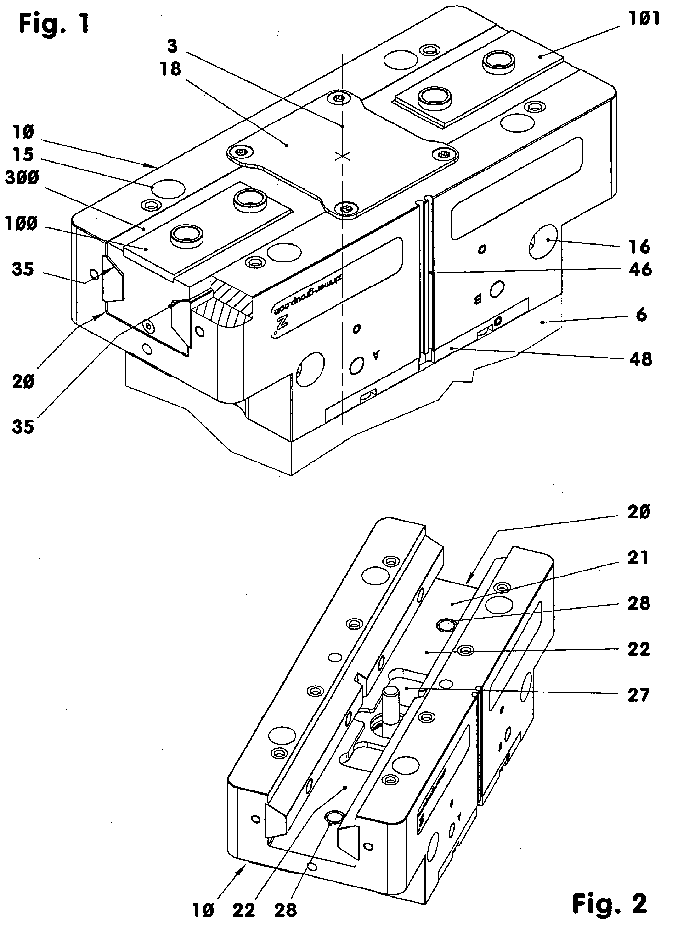

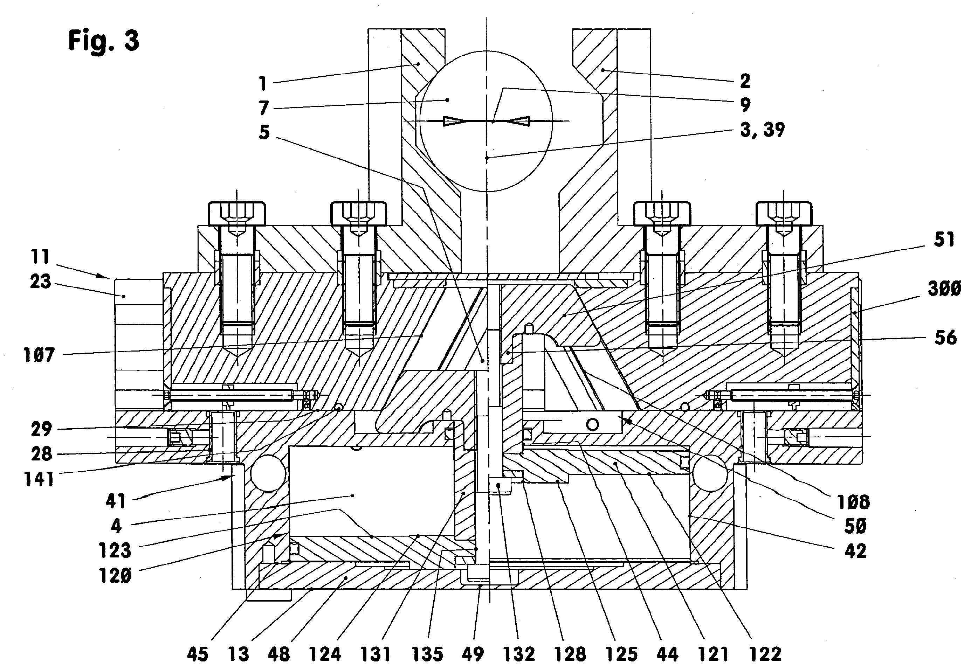

Die Figur 1 zeigt eine Parallelgreifvorrichtung mit zwei Schlitten (100, 101). Die in ihrer Längsrichtung beweglichen Schlitten (100, 101) sind in einem Gehäuse bzw. Grundkörper (10) in einer gemeinsam genutzten Führungsnut (20) gleitgelagert geführt. Das die Führungsnut aufnehmende Gehäuse (10) umgibt ferner eine z.B. doppeltwirkende Zylinder-Kolben-Einheit (120), vgl. Figur 3. Die Zylinder-Kolben-Einheit wirkt über ein Doppelschiebekeilgetriebe (50) auf die Schlitten (100, 101).

Die Figur 3 stellt die Parallelgreifvorrichtung im Längsschnitt mit zwei auf den Schlitten (100, 101) aufgeschraubten Greifbacken (1, 2) dar. Die Greifbacken sollen ein z.B. zylinderförmiges Werkstück (7) greifen. Der Greifbacken (1) der linken Vorrichtungsseite liegt am Werkstück (7) an, während der Greifbacken (2) der rechten Vorrichtungsseite in geöffneter Position dargestellt ist. Im Gegensatz zur fiktiven Darstellung nach Figur 3 bewegen sich die Greifbacken (1, 2) getriebebedingt zwangsläufig immer synchron aufeinander zu oder voneinander weg.

Der z.B. im Wesentlichen quaderförmige Grundkörper (10) der Parallelgreifvorrichtung besteht aus einem oberen Führungsabschnitt (11) und einem unteren Antriebsabschnitt (41). Er ist beispielsweise aus der Aluminiumlegierung AlMgSi1 gefertigt. Im Ausführungsbeispiel hat der Grundkörper (10) die Abmessungen von 270 mm * 115 mm * 111 mm. Bei dieser beispielhaften Baugröße beträgt der maximale Hub jedes Schlittens (100, 101) bzw. Greifbackens (1, 2) 16,7 mm.

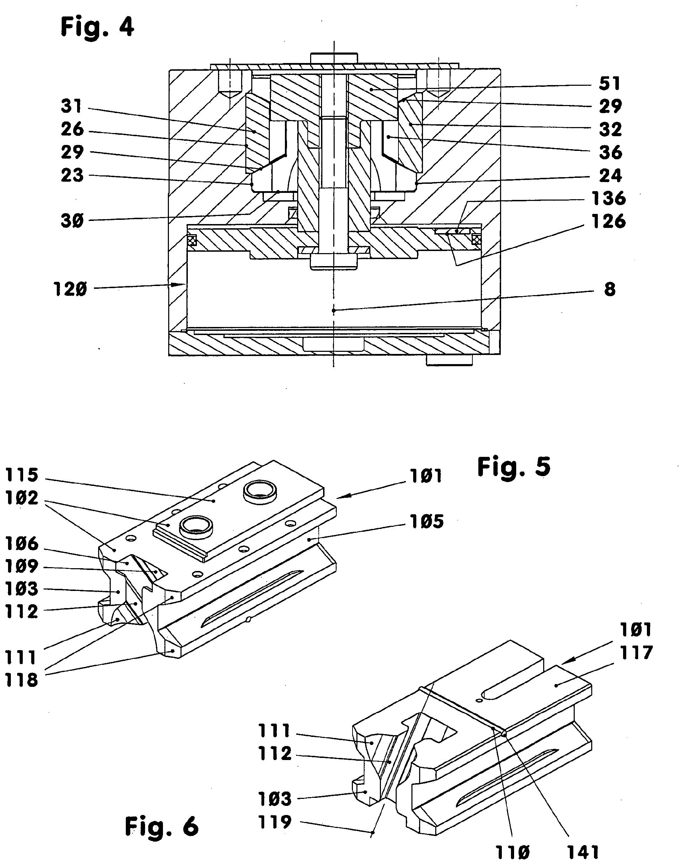

Der Führungsabschnitt (11) nimmt zentral die nach oben - zu den Greifelementen (1, 2) hin - offene Führungsnut (20) auf, vgl. Figuren 1, 2 und 4, deren z.B. rechteckiger Querschnitt eine Breite von z.B. 57 mm und Höhe von z.B. 44,6 mm misst. In den planen Seitenwandungen (23, 24) der Führungsnut (20) ist jeweils eine flache, z.B. 2 mm tiefe und 29 mm breite Schienenführungsnut (26) zur Aufnahme einer Führungsschiene (31, 32) eingearbeitet. Die einzelne Schienenführungsnut (26) hat einen rechteckigen Querschnitt, einen planen Nutgrund und z.B. plane Seitenwandungen. Die Schienenführungsnuten (26) erstrecken sich hier über die gesamte Länge des Grundkörpers (10). Mittig zwischen den planen Seitenwandungen (23, 24) der Führungsnut (20) liegt die vertikale Mittenlängsebene (8), vgl. Figur 4.

Die Führungsnut (20) hat einen ebenen Nutgrund (21), in dem mittig eine Schiebekeilausnehmung (27) eingearbeitet ist. In den beiden äußeren Bereichen der Führungsnut (20) befinden sich jeweils eine Sensorbohrung (28), in der z.B. jeweils ein Näherungssensor für das Erkennen der Greifposition der Schlitten (100, 101) angeordnet ist. Zwischen der Schiebekeilausnehmung (27) und den einzelnen Sensorbohrungen (28) befindet sich jeweils eine plane, feinbearbeitete Dichtzone (22), in der ein den Gehäuseinnenraum (5) abdichtende Dichtleiste (141 - 145) zur Anlage kommt, vgl. Figur 2.

Jede Führungsschiene (31, 32) ist hier eine aus einem nichtrostenden Stahl, z.B. aus einem X90CrMoV18 gefertigte, im Wesentlichen trapezförmige Stange. Die Breite der sich z.B. über die Länge des Grundkörpers (10) erstreckende Führungsschiene (31, 32) beträgt im Ausführungsbeispiel 29 mm. Die Höhe der Führungsschiene (31, 32) misst z.B. 13,85 mm. Aufgrund der hohen Festigkeit einer derartigen Führungsschiene (31, 32) können die Schlitten große Momente auf den Grundkörper (10) übertragen. Demzufolge kann die Greifvorrichtung große Greifkräfte auf das aufzunehmende Werkstück (7) ausüben.

Die einzelne Führungsschiene (31, 32) hat einen sechseckigen Querschnitt und weist zwei einander spiegelsymmetrisch gegenüberliegende Tragflanken auf, die einen Winkel von 30 bis 90 Winkelgraden einschließen. Mindestens eine der Führungsschienen (31, 32) weist mittig eine Quernut (36) mit der Breite von z.B. 5,7 mm und der Tiefe von z.B. 5,7 mm auf. Diese Quernut (36) dient u.a. der zusätzlichen verschleißfesten Führung des im Doppelschiebekeilgetriebe (50) verwendeten Doppelschiebekeilglieds (51). Im Ausführungsbeispiel hat jede Führungsschiene (31, 32) eine Quernut (36).

Ggf. können die einzelnen Führungsschienen (31, 32) auch aus zwei oder mehreren hintereinander angeordneten Abschnitten aufgebaut sein. Im Ausführungsbeispiel sind die Führungsschienen (31, 32) jeweils mit vier Senkschrauben am Grundkörper (10) befestigt.

Der unterhalb des Führungsabschnitts (11) gelegene Antriebsabschnitt (41) nimmt im Wesentlichen die Zylinder-Kolben-Einheit (120) und die Betätigungsmittel führenden Kanäle und Durchbrüche auf. In den seitlichen Bereichen unterhalb des Führungsabschnitts (11) ist der Grundkörper (10) beidseitig um ca. 17,2 % der Grundkörpergesamtlänge auf einer Höhe von ca. 42 % der Grundkörpergesamthöhe verkürzt ausgebildet.

Die Unterseite (13) des Grundkörpers (10) hat eine hier zwölfeckige Deckelausnehmung (45), vgl. Figuren 3 und 4. Die Deckelausnehmung erstreckt sich von der vorderen bis zur hinteren Längsseitenwandung des Grundkörpers (10). Von der Deckelausnehmung (45) aus ragt eine z.B. 40 mm tiefe Zylinderausnehmung (42) in den Grundkörper (10) in Richtung der Führungsnut (20) hinein. Die Zylinderausnehmung (42) hat hier einen ovalen Querschnitt.

Im Zentrum des Bodens der Zylinderausnehmung (42) befindet sich eine Durchgangsbohrung (44), vgl. Figur 3, die die Zylinderausnehmung (42) mit der Führungsnut (20) verbindet. Ca. mittig weist die Durchgangsbohrung (44) einen Einstich zur Aufnahme eines Kolbenstangendichtrings auf.

Zur Befestigung des Grundkörpers (10) an einem Maschinenschlitten (6) verfügt dieser über vier vertikale Bohrungen (15) und zwei Querdurchgangsbohrungen (16). In Figur 1 werden speziell die vertikalen Bohrungen (15) zur Befestigung benutzt.

Der Grundkörper (10) weist auf der in Figur 1 dargestellten großen Längsseitenwandung im mittleren Bereich zwei auch zu dieser Seitenwandung hin offene Sensorausnehmungen (46) auf. Ihre großteils u-förmigen Querschnitte werden im Bereich der Seitenwandung durch beidseits - als Fixierschutz für einsetzbare Kolbenpositionssensoren - vorspringende Hintergriffe verengt.

Der Deckel (48), der mit geringem Spiel in die 12-eckige Deckelausnehmung (45) passt, vgl. Figuren 3 und 4, hat zentral eine dreistufige Vertiefung (49), in die der Kolben (121) inklusive der Kolbenstangenschraube (132) des pneumatischen Antriebs (120) in der Greiferschließstellung partiell hineinragen kann.

In dem von der Zylinderausnehmung (42) und dem Deckel (48) umgebenen Zylinderinnenraum (4) ist der ovale Kolben (121) mit seiner zweiteiligen Kolbenstange (131, 132) angeordnet. Der Kolben (121) hat zentral eine dreistufige Durchgangsbohrung (135), wobei die mittlere Stufe den kleinsten Durchmesser aufweist.

Die kolbenstangenseitige Bohrungsstufe hat zur Aufnahme einer Kolbenstangenhülse (131) einen Durchmesser von z.B. 25 mm. Um die Durchgangsbohrung (135) herum hat der Kolben (121) dort einen z.B. 0,4 mm hohen scheibenförmigen Vorsprung (124), der als oberer Anschlag des Kolbens (121) dient. Der Kolben (121) hat kolbenstangenseitig, nach dem Schnitt in Figur 4 auf der rechten Seite, eine Sacklochbohrung (126). In diese Sacklochbohrung ist ein Scheibenmagnet (136) für die Kolbenpositions-überwachung eingeklebt.

Der ovale Kolben (121) besitzt zur Abdichtung gegenüber der Zylinderbodenwandung des Grundkörpers (10) einen umlaufenden, in einer Dichtnut gelagerten Quaddichtring. Die Kolbenbodenseite (122), vgl. Figur 4, weist ebenfalls einen Vorsprung (125) auf, in dessen zentraler Senkung (128) der Kopf der Kolbenstangenschraube (132) mit einer Unterlagscheibe sitzt, vgl. Figur 3.

Die Kolbenstange (131, 132) besteht hier aus der Kolbenstangenschraube (132), z.B. einer M10-Zylinderkopfschraube, und einer auf ihr aufgesteckten Kolbenstangenhülse (131). Diese beiden Teile bilden zusammen mit dem Kolben (121) und Doppelschiebekeilglied (51) des Doppelschiebekeilgetriebes (50) eine formsteife Baugruppe. Die Kolbenstangenschraube (132) ist auf den Rohrzapfen (56) des Doppelschiebekeilglieds (51) aufgesteckt und in der Gewindebohrung (98) verschraubt.

Das Doppelschiebekeilglied (51), das im mittleren Bereich der Führungsnut (20) als Teil eines Doppelschiebekeilgetriebes (50) angeordnet ist, ist im Wesentlichen ein balkenartiges Bauteil, das zur vertikalen Mittenlängsebene (8) und zur vertikalen Mittenquerebene (39) spiegelsymmetrisch aufgebaut ist.

Das Doppelschiebekeilglied (51) besteht beim Parallelgreifer im Wesentlichen aus einem zentralen Basiskörper (55) zur Anbindung an einem Stellglied (120) und zwei angeformten T-Nutsteinen (61, 62), zur Anlenkung der beiden Schlitten (100, 101), vgl. Figuren 2, 7 bis 12. Der Basiskörper (55) hat eine Breite, die mit der Gesamtbreite der T-Nutsteine (61, 62) übereinstimmt. Vom ihm (55) stehen zwei Nutsteinhaltestege (91, 92), zwei Stützstege (97) und ein Rohrzapfen (56) ab.

Die beiden beidseitig vom Basiskörper (55) senkrecht abstehenden Stützstege (97) haben eine Breite von z.B. 6,5 mm. Ihre Länge erstreckt sich von der Oberseite (52) des Doppelschiebekeilglieds (51) bis zum Ansatz des Rohrzapfens (56). Über den Basiskörper (55) stehen sie seitlich z.B. 9,5 mm über.

Jeder am Basiskörper (55) angeformte Nutsteinhaltesteg (91, 92) - er hat eine Breite von z.B. 11 mm - trägt an seinem außenliegenden Ende einen T-Nutstein (61, 62). Letzterer steht beidseitig z.B. 7 mm über den jeweiligen Nutsteinhaltesteg (91, 92) über. Er hat im Wesentlichen einen Parallelogrammquerschnitt, dessen spitze Winkel z.B. 60,3 Winkelgrade einschließen.

Jeder T-Nutstein (61, 62) hat eine Außenflanke (63), die zugleich auch eine Stirnseite des Doppelschiebekeilglieds (51) darstellt. Der Außenflanke (63) liegen nutsteinstegseitig zwei Innenflanken (64) gegenüber, die beide in einer zur Außenflanke (63) parallelen Ebene liegen. Der Abstand zwischen der Außenflanke (63) und einer Innenflanke (64) misst z.B. 11,5 mm. Die Stirnseiten (65) des Doppelschiebekeilglieds (51) schließen mit der Mittellinie (3) z.B. einen Winkel von 29,7 Winkelgraden ein. Die Ausdehnung der T-Nutsteine (61, 62) beträgt in einer zur Mittellinie (3) parallelen Richtung z.B. 21 mm.

Die Unterseite des Basiskörpers (55) weist eine Unterseitenausnehmung (54) mit einer Tiefe von z.B. 4,1 mm auf. Sie erstreckt sich in der Schlittenverfahrrichtung (9) bis ca. 4 mm vor die T-Nutsteine (61, 62). Aus der Unterseitenausnehmung (54) steht der z.B. 10 mm lange Rohrzapfen (56) hervor. Er weist einen Außendurchmesser von z.B. 18 mm auf. Der Basiskörper (55) hat eine durchgehende Gewindebohrung (98), die auch den Rohrzapfen (56) durchdringt. Die Mittellinie der Gewindebohrung (98) ist deckungsgleich mit der Mittellinie (3). Auf den Rohrzapfen (56) ist die Kolbenstangenhülse (131) aufgesteckt. In der Gewindebohrung (98) ist die Kolbenstangenschraube (132) fixiert.

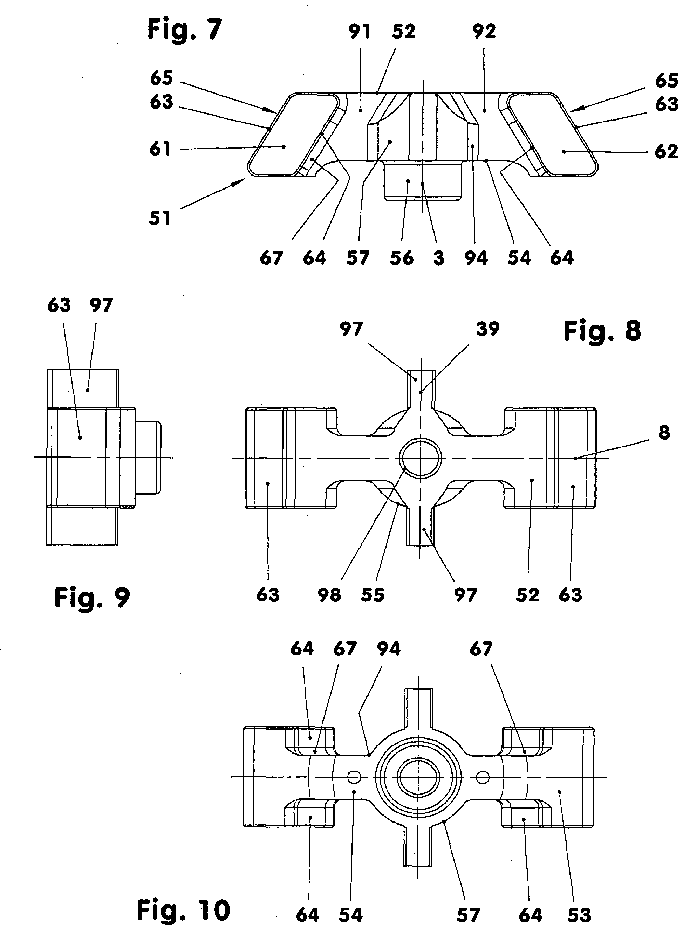

In der Regel wird die Geometrieform des Basiskörpers (55) zwischen dem T-Nutsteinen (61, 62) durch die Form des Fräswerkzeuges vorgegeben, das die Innenflanken (64) freischneidet. Dieses Freischneiden gibt dem Basiskörper (55) die Gestalt eines Doppelkeiles, vgl. Figuren 2, 11 und 12. Nach den Figuren 7 bis 10 erhält der Basiskörper (55) durch eine materialabtragende Nachbearbeitung hier bereichsweise eine zylindrische Außenwandung (57), aus der die Nutsteinhaltestege (91, 92) und die Stützstege (97) herausragen. Diese Außenwandung (57) hat dabei z.B. den gleichen Außendurchmesser wie die angebaute Rohrzapfen (56). Durch diese Nachbearbeitung wird die Masse des Doppelschiebekeilglieds (51) kleiner. Zugleich wird durch diese Maßnahme zwischen der Unterseitenausnehmung (54) und der den Zylinderraum des Stellglieds (120) abgrenzenden Wandung ein das Schmiermittel des Doppelschiebekeilgetriebes (50) verdrängender Spalt vermieden.

Der Übergang zwischen jeder Innenflanke (64) eines T-Nutsteins (61, 62) und dem Nutsteinhaltesteg (91, 92) befindet sich eine Nutsteinausrundung (67), die die Kerbspannungsbelastung der Übergangsstelle gegenüber üblichen Ausrundungen bzw. Außenkerben bei Doppelschiebekeilgliedern des Standes der technik um beispielweise 40 Prozent senkt. Im Ausführungsbeispiel, nach den Figuren 2 und 7 bis 12, hat die Nutsteinausrundung (67) die Form eines Viertels einer Zylindermantelfläche, wobei die seitlichen Mantelflächenenden jeweils tangential in die Innenflanken und tangential in die Seitenwandungen des Nutsteinhaltestegs (91, 92) übergehen. Der Radius der Nutsteinausrundung beträgt z.B. 2 mm.

Auch der Übergang zwischen dem Basiskörper (55) und der Seitenwandung des Nutsteinhaltestegs (91, 92) ist als Stegausrundung (94) ausgebildet, deren Form der Nutsteinausrundung (67) entspricht. In den Ausführungsbeispielen sind nur beispielhaft die Radien der Nutsteinausrundungen (67) und der Stegausrundungen (94) gleich groß.

Jeder T-Nutstein (61, 62) des Doppelschiebekeilglieds (51) greift formschlüssig in einen der in der Führungsnut (20) gelagerten Schlitten (100, 101) ein. Jeder der Schlitten ist primär ein quaderförmiger Körper, in den beidseitig Schlittenführungsnuten (105) eingearbeitet sind. Die innere Stirnseite (103) ist zu den Schlittenlängsseiten hin angefast. Diese Frontfasen (118) haben eine Breite von z.B. 7 mm und einen Fasenwinkel von 30 Winkelgraden.

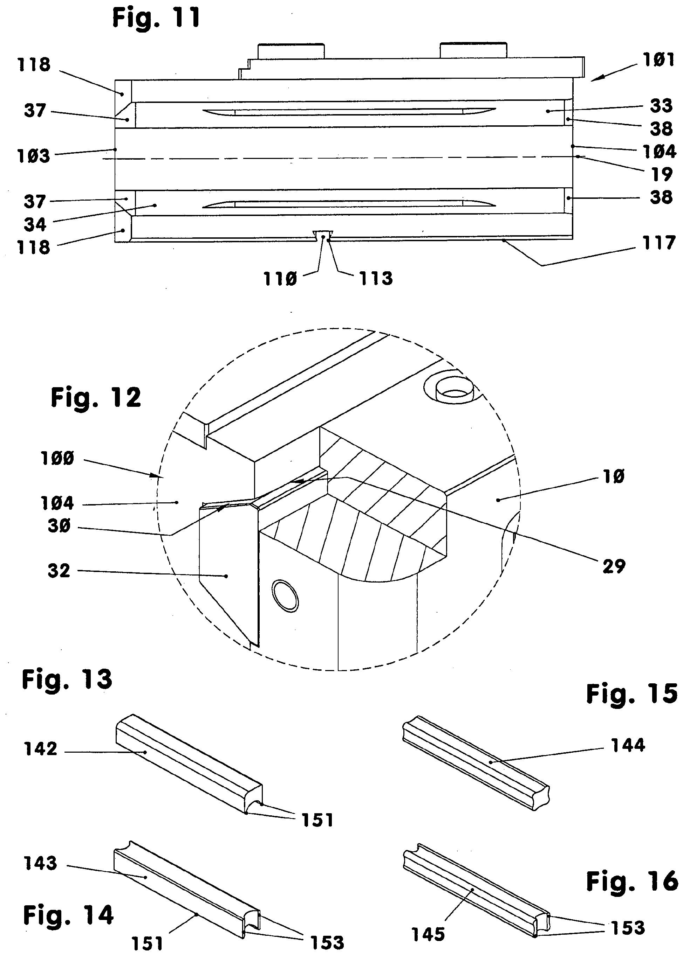

Über die z.B. schrägen Wandungen der Nuten (105), diese sind die Führungsflanken (33, 34), ist der einzelne Schlitten (100, 101) auf den Führungsschienen (31, 32) gleitgelagert. Die Führungsflanken (33, 34), die schlittenseitigen Teile der Arbeitsfugen (29) sind, haben - bis auf die in der Nähe der Stirnseiten (103, 104) gelegenen Ränder und ggf. integrierten Schmiertaschen - eine ebene Fläche. In den stirnseitigen Randbereichen fallen sie zur Ausbildung von Auflauframpen (37, 38) hinter die Arbeitsfugen (29) zurück, vgl. Figuren 11 und 12. Dadurch entsteht im Randbereich der Führungsflanken (33, 34), zwischen der ebenen Arbeitsfuge (29) und der jeweiligen Auflauframpen (37, 38), ein sogenannter Keilspalt (35).

In den Ausführungsbeispielen hat jede Auflauframpe (37, 38) eine gekrümmte Oberfläche, die die Form einer Zylindermantelteilfläche hat. Jede Zylindermantelteilfläche geht dabei tangential aus der zugehörigen Führungsflanke (33, 34) hervor, wobei die zur Zylindermantelteilfläche gehörende Mittellinie zum einen parallel zur Ebene der jeweiligen Führungsflanke (33, 34) und zum anderen in einer Ebene liegt, die senkrecht zur vertikalen Mittenlängsebene (8) ausgerichtet ist. Für die vorderen Auflauframpen (37) hören die Führungsflanken (33, 34) z.B. 5 mm vor der vorderen Stirnseite (103) auf. Der Krümmungsradius der Zylindermantelteilfläche misst z.B. 40 mm, wodurch der Keilspalt (35) im Bereich der Stirnfläche (103) seine maximale Höhe von z.B. 0,3 mm erreicht. Für die hinteren Auflauframpen (38) enden die Führungsflanken (33, 34) z.B. 2 mm vor der hinteren Stirnseite (104). Folglich ergibt sich hier, bei einem Krümmungsradius der Zylindermantelteilfläche von z.B. 10 mm, ein Keilspalt (35), der an der hinteren Stirnfläche (104) eine maximale Höhe von z.B. 0,2 mm erzielt.

Die Führungsflanken (33, 34) sind mit ihren Auflauframpen (37, 38) spiegelsymmetrisch zu einer Horizontalebene (19) aufgebaut, die die Schlittenführungsnuten (105) mittig halbiert. Um die spanabhebende Fertigung der Auflauframpen (37, 38) zu erleichtern, schließen die Führungsflanken (33, 34) nicht direkt am Nutgrund der Schlittenführungsnuten (105) an. Stattdessen liegt am Nutgrund oben und unten jeweils eine z.B. 0,6 mm tiefe, sich über die gesamte Länge des Schlittens (100, 101) erstreckende, Nutwandung an, die parallel zur horizontalen Schlittenführungsmittenebene (19) orientiert ist.

Mithilfe der Keilspalte (35), deren Spaltbreiten sich jeweils entgegen der Schlittenverfahrrichtung (9) zur Führungsflanke (33, 34) hin verjüngen, wird das an den Führungsschienen (31, 32) anhaftende Schmiermittel in die jeweilige Arbeitsfuge (29) gepresst.

U.a. um das Schmiermittel des Doppelschiebekeilgetriebes (50) im Gehäuseinnenraum (5) dauerhaft zu halten, werden die Schlitten (100, 101) jeweils mit einer Dichtleiste (141 - 145) ausgestattet. Letztere ist im jeweiligen Schlitten (100, 101) in einer Dichtleistenhaltenut (110) angeordnet. Die Dichtleiste (141 - 145) liegt dabei am Nutgrund (21) der Führungsnut (20) abdichtend an. Der schmale Spalt zwischen der Schlittenunterseite (117) und dem Nutgrund (21) stellt eine sog. Arbeitsnebenfuge (30) dar.

Die Dichtleistenhaltenut (110) ist in die Unterseite (117) des jeweiligen Schlittens eingearbeitet. Sie liegt quer zur Schlittenverfahrrichtung (9). Der Abstand zwischen der Mitte der Dichtleistenhaltenut (110) und der vorderen Stirnseite (103) entspricht nach Figur 11 z.B. 44,5 Prozent der Schlittengesamtlänge. Der Ort der Dichtleistenhaltenut (110) ist so gewählt, dass die Dichtleiste (141 - 145) über den gesamten Schlittenverfahrweg in der feinbearbeitenden Dichtzone (22) anliegt, in der keine Bohrung oder sonstige Kante angeordnet ist. Die Dichtleistenhaltenut (110) hat nach den Figuren 3, 5 und 6 einen im Wesentlichen fast kreisrunden, offenen Querschnitt, dessen Innendurchmesser z.B. 3,2 mm beträgt. Die Mittellinie der Dichtleistenhaltenut (110) hat von der Unterseite (117) einen Abstand von z.B. 1,0 mm. Im Bereich der Unterseite (117) verjüngt sich die Dichtleistenhaltenut (110) auf z.B. 2,8 mm, sodass dort zwei Haltenuthintergriffe (113) ausgebildet sind, vgl. Figur 11. In der Dichtleistenhaltenut (110), nach den Figuren 3, 5 und 6, ist eine Dichtleiste (141) mit kreisrundem Querschnitt eingelegt.

Die Figuren 13 bis 16 zeigen vier weitere Ausführungsformen einer Dichtleiste. Die dargestellten Dichtleisten (142 - 145) sind vergrößert und auf ein Drittel verkürzt gezeichnet. Die Dichtleiste (142), nach Figur 13, hat einen quadratischen oder rechteckigen Querschnitt. Sie verfügt über zwei Dichtlippen (151). Der Figur 14 ist eine Dichtleiste (143) zu entnehmen, die ebenfalls einen quadratischen oder rechteckigen Querschnitt aufweist. Sie hat auch zwei Dichtlippen (151), die zur Anlage an der Dichtzone (22) vorgesehen sind. Des Weiteren hat sie an beiden Stirnseiten je zwei Stirndichtlippen (153), die für eine gleitende und dichte Anlage an den Seitenwandungen (23, 24) der Führungsnut (20) vorgesehen sind. Die Dichtkanten der Stirndichtlippen (153) sind parallel zur Mittellinie (3) ausgerichtet. Für die Dichtleiste (142) und (143) sind in der Dichtleistenhaltenut (110) keine Haltenuthintergriffe (113) vorgesehen.

Die Dichtleisten (144) und (145) gemäß der Figuren 15 und 16 haben jeweils den Querschnitt eines Quadrings. Die Dichtleiste (145) weist an ihren Stirnseiten jeweils zwei parallele Stirndichtlippen (153) auf. Für diese Dichtleisten (144, 145) hat die Dichtleistenhaltenut (110), vgl. Figur 11, jeweils einen rechteckigen Querschnitt, der sich durch zwei Haltenuthintergriffe im Bereich der Unterseite (117) des jeweiligen Schlittens (100, 101) verengt.

Selbstverständlich kann die Dichtleistenhaltenut (110) auch einen trapezförmigen - sich zur Unterseite (117) hin verjüngenden - Querschnitt aufweisen, um eine Dichtleiste mit nur einer Dichtlippe und gegebenenfalls pro Stirnseite nur einer Stirndichtlippe verdrehsicher zu lagern. Diese Dichtleiste ist jeweils so eingebaut, dass die Dichtkanten der Dichtlippe und der Stirndichtlippen in Greifrichtung (9) dem Zentrum der Dichtleiste vorauseilen, um so speziell im Greifhub das Schmiermittel des Gehäuseinnenraums (5) sicher vor sich her zu schieben.

Die einzelnen Dichtleistenhaltenuten (110) können in der Unterseite (117) nicht nur quer zur Schlittenverfahrrichtung (9), sondern auch schräg, z.B. unter einem Winkel von 0 bis 30 Winkelgraden ausgerichtet sein. Es ist auch möglich, die Dichtleistenhaltenut (110) in Pfeilform auszuführen, sodass zwei Nutschenkel entstehen, die einen stumpfen Winkel einschließen.

Alle vorgeschlagenen Dichtleisten (141 - 145) sind beispielsweise aus einem Elastomer oder einem vergleichbaren Gummiwerkstoff hergestellt.

Die Schlitten (100, 101) sind aus dem Einsatzstahl 16MnCr5 gefertigt. Ggf. wird als Werkstoff auch ein Vergütungsstahl oder ein rost- und säurebeständiger Stahl verwendet.

Der einzelne Schlitten (100, 101), dessen Breite z.B. 0,2 mm kleiner ist als die Breite der Führungsnut (20), hat in der dem Doppelschiebekeilglied (51) zugewandten Stirnfläche (103) eine schräg angeordnete T-Nut (106), mit der der Schlitten (100, 101) den T-Nutstein (61, 62) des Doppelschiebekeilglieds (51) mit einem unter 0,1 mm liegenden Spiel umgreift. Die Neigung der T-Nut (106) entspricht der jeweiligen Schrägstellung des darin geführten T-Nutsteins (61, 62) des Doppelschiebekeilglieds (51).

Nach den Figuren 5 und 6 weist die Stirnfläche (103) eine Ausnehmung (111) auf, die parallel und entlang der jeweiligen T-Nut (106) ausgebildet ist. Die Ausnehmung (111), deren Breite z.B. geringfügig größer oder gleich der Breite der T-Nut ist, lässt für die T-Nut (106) zwei Stege (112) stehen. Die Stege (112) haben dabei zumindest über nahezu den größten Teil der Steglänge, oder über die Steggesamtlänge, einen konstanten Querschnitt, sodass über den gesamten Verfahrweg des Doppelschiebekeilglieds (51) die Belastung der Stege nahezu konstant ist oder konstant bleibt, was der Verschleißminderung dient.

Gemäß den Figuren 5 und 6 sind in den Grund der T-Nut (106) mit Schmiermittel befüllbare Schmiertaschen (109) eingearbeitet. Auf der dem Doppelschiebekeilglied (51) abgewandten Stirnfläche weist der einzelne Schlitten (100, 101) eine Gewindebohrung auf, vgl. Figur 1, deren Mittellinie auf der Mittenlängsebene (8) liegt. Über diese Gewindebohrung kann eine Führungsnutdichtung (300) mittels einer Senkschraube befestigt werden.

Auf der Oberseite jedes Schlittens (100, 101) befindet sich ein quaderförmiger Adapteraufsatz (115), in dessen Oberseite (102) zwei mit Zylindersenkungen ausgestattete Gewindebohrungen angeordnet sind, an denen die Greifbacken (1, 2) lösbar befestigt werden. In den Zylindersenkungen stecken Zentrierhülsen zur präzisen, zumindest formschlüssigen Positionierung der Greifbacken (1, 2) auf den Schlitten (100, 101). Ggf. sind dort die Greifbacken (1, 2) auch direkt angeformt oder unlösbar fixiert.

Die Schlitten (100, 101) sind in der Führungsnut (20), vgl. Figur 3, so hintereinander angeordnet, dass sich bei minimalem Greifbackenabstand ihre einander zugewandten Stirnseiten (103) kontaktieren oder zumindest fast berühren.

Der mittlere Bereich der Nutöffnung der Führungsnut (20) ist mit einer Abdeckplatte (18) verschlossen. Die Abdeckplatte (18) ist im Bereich der Führungsnut (20) so breit ausgelegt, dass die beiden Schlitten (100, 101), in Schließstellung der Greifbacken (1, 2), diese gerade noch nicht berühren.

Für die Schließ- bzw. Greifbewegung wird der Kolben (121), vgl. Figur 2, der sich zusammen mit dem Doppelschiebekeilglied (51) in seiner oberen Endlage befindet, z.B. mit Druckluft aus dieser Position heraus nach unten bewegt. Dazu wird seine Kolbenstangenseite (123) mit Druckluft beaufschlagt. Das sich nach unten bewegende Doppelschiebekeilglied (51) zieht die Schlitten (100, 101) in der Führungsnut (20) nach innen zur Mitte hin. Die Kombination aus Kolben (121), Kolbenstange (131, 132) und Doppelschiebekeilglied (51) wird zusätzlich in den Quernuten (36) der Führungsschienen (31, 32) geführt. Bei der Schließbewegung kommen die Keilflächen (108) an den Innenflanken (64) des Doppelschiebekeilglieds (51) zur Anlage. Sobald sich die Greifbacken (1, 2) am Werkstück (7) angelegt haben, stoppt die Bewegung bei einer Aufrechterhaltung der vollen Klemmkraft.

Zum Lösen des Werkstücks (7) wird die Kolbenbodenseite mit Druckluft beaufschlagt. Der sich nach oben bewegende Verbund aus dem Kolben (121) und dem Doppelschiebekeilglied (51) drückt die Schlitten (100, 101) bzw. die Greifbacken (1, 2) solange auseinander, bis die Kolbenstangenseite (123) am Grund der Zylinderausnehmung (42) zur Anlage kommt. Hier kontaktieren die Keilflächen (107) bei der Lösebewegung die Außenflanken (63) des Doppelschiebekeilglieds (51).

Zur Erhöhung der Klemm- und Lösekraft können z.B. im Zylinder mehrere Kolben hintereinander angeordnet werden. Auch ist es möglich, den Kolben in mindestens einer Hubrichtung mittels einer mechanischen Feder anzutreiben oder zusätzlich zu unterstützen.

Kombinationen der in den Figuren 1 bis 16 gezeigten Ausführungsbeispiele sind denkbar.

### Bezugszeichenliste:

- 1, 2: Greifelemente, Greifbacken
- 3: Mittellinie zu (10, 50, 120)
- 4: Zylinderinnenraum
- 5: Gehäuseinnenraum, Gehäuseinneres, Keilgetrieberaum
- 6: Maschinenschlitten, Maschinenteil, Handhabungsgeräteteil
- 7: Werkstück
- 8: vertikale Mittenlängsebene
- 9: Greifrichtung, Schlittenverfahrrichtung

- 10: Grundkörper, Gehäuse
- 11: Führungsabschnitt
- 13: Grundkörperunterseite
- 15: Befestigungsbohrungen, vertikal
- 16: Quergangsbohrungen
- 18: Gehäuseabdeckung, Abdeckplatte
- 19: Schlittenführungmittenebene, horizontal

- 20: Führungsnut
- 21: Nutgrund
- 22: Dichtzone
- 23, 24: Seitenwandungen, Führungsnutwandungen
- 26: Schienenführungsnut
- 27: Schiebekeilausnehmung
- 28: Sensorbohrung
- 29: Arbeitsfuge
- 30: Arbeitsnebenfuge
- 31, 32: Führungsschiene, Schlittenführungsschiene
- 33, 34: Führungsflanken an (100) und )101); oben, unten
- 35: Keilspalt
- 36: Quernut
- 37, 38: Auflauframpen, vorn und hinten
- 39: vertikale Mittenquerebene

- 41: Antriebsabschnitt
- 42: Zylinderausnehmung, oval
- 44: Durchgangsbohrung, mittig
- 45: Deckelausnehmung
- 46: Sensorausnehmungen
- 48: Deckel
- 49: Vertiefung

- 50: Doppelschiebekeilgetriebe
- 51: Doppelschiebekeilglied, Doppelschiebekeil, Getriebebauteil
- 52: Oberseite
- 54: Unterseitenausnehmung
- 55: Basiskörper
- 56: Rohrzapfen
- 57: Außenwandung, zylindrisch

- 61, 62: T-Nutsteine
- 63: Außenflanken, Stirnseiten, außen
- 64: Innenflanken
- 65: Stirnseiten, Stirnflächen, schräg
- 67: Nutsteinausrundungen, Ausrundungen, Außenkerben
- 91, 92: Nutsteinhaltestege
- 94: Stegausrundungen, Ausrundungen, Übergangsstellen, Außenkerben
- 97: Stützstege
- 98: Gewindebohrung

- 100, 101: Schlitten
- 102: Oberseite
- 103: Stirnseite, Stirnfläche; vorn, innen
- 104: Stirnseite, Stirnfläche; hinten, außen
- 105: Schlittenführungsnuten, Nuten
- 106: T-Nut
- 107: Keilflächen, Öffnungsanlage
- 108: Keilflächen, Schließanlage
- 109: Schmiertaschen
- 110: Dichtleistenhaltenut
- 111: Ausnehmung an (103)
- 112: Stege für (106)
- 113: Haltenuthintergriffe
- 115: Adapteraufsatz
- 117: Unterseite
- 118: Frontfasen
- 119: Führungslängsrichtung

- 120: Zylinder-Kolben-Einheit; Antrieb, pneumatisch Stellglied
- 121: Kolben, oval
- 122: Kolbenbodenseite
- 123: Kolbenstangenseite
- 124: Vorsprung, scheibenförmig, Anschlag
- 125: Vorsprung, kolbenbodenseitig, zylindrisch
- 126: Sacklochbohrungen für (136)
- 128: Senkung

- 131: Kolbenstangenhülse, Kolbenstange
- 132: Kolbenstangenschraube, Kolbenstange
- 135: Durchgangsbohrung
- 136: Scheibenmagnete

- 141: Dichtleiste mit kreisförmigen Querschnitt
- 142: Dichtleiste mit Rechteckquerschnitt
- 143: Dichtleiste mit Rechteckquerschnitt und Stirnlippen
- 144: Dichtleiste mit Quadringquerschnitt
- 145: Dichtleiste mit Quadringquerschnitt und Stirndichtlippen

- 151: Dichtlippen
- 153: Stirndichtlippen

- 300: Führungsnutdichtung

## Patentansprüche

1. Greifvorrichtung mit bewegliche Greifelemente (1, 2) tragenden Schlitten (100, 101), wobei die Schlitten (100, 101) in Greifrichtung (9) der Greifelemente (1, 2) hintereinander in einer in einem Grundkörper (10) angeordneten, zu den Greifelementen (1, 2) hin zumindest bereichsweise offenen Führungsnut (20) parallel zur Greifrichtung (9) - zwischen einer Öffnungs- und Schließstellung - über ein Stellglied (120) antreibbar geführt und quer zur Greifrichtung (9) allseitig abstützend gelagert sind,
- wobei zwischen den Schlitten (100, 101) ein diese kuppelndes Doppelschiebekeilglied (51) angeordnet ist, das senkrecht zur Greifrichtung (9) verfahrbar an einem beweglichen Teil des Stellglieds (120) angelenkt ist,
- wobei die Führungsnut (20) im Nutgrund (21) pro Schlitten (100, 101) eine plane, feinbearbeitete Dichtzone (22) aufweist,
- wobei an jedem Schlitten (100, 101) an dessen Unterseite (117) eine Dichtleiste (141 - 145) angeordnet ist, die die Arbeitsnebenfuge (30) zwischen dem jeweiligen Schlitten (100, 101) und der Führungsnut (20) abdichtet,
- wobei jeder Schlitten (100, 101) zwei Schlittenführungsnuten (105) mit je zwei Führungsflanken (33, 34) hat und
- wobei jede Führungsflanke (33, 34) in den stirnseitigen Endbereichen des einzelnen Schlittens (100, 101) Auflauframpen (37, 38) aufweist, die jeweils - zwischen dem einzelnen Schlitten (100, 101) und den Schlittenführungsschienen (31, 32) des Gehäuses (10) - einen sich zu den Schlittenstirnseiten (103, 104) hin verbreiternden Keilspalt (35) bereitstellen.

2. Greifvorrichtung gemäß Anspruch 1, **dadurch gekennzeichnet, dass** die Dichtzone (22) im Nutgrund (21) eine Breite hat, die der Breite des Nutgrunds (21) entspricht und deren Länge größer als der Schlittenverfahrweg ist.

3. Greifvorrichtung gemäß Anspruch 1, **dadurch gekennzeichnet, dass** der einzelne Schlitten (100, 101) in seiner Unterseite (117) eine Dichtleistenhaltenut (110) zur Aufnahme einer Dichtleiste (141 - 145) aufweist.

4. Greifvorrichtung gemäß Anspruch 1, **dadurch gekennzeichnet, dass** die Dichtleistenhaltenut (110) quer zur Schlittenverfahrrichtung (9) ausgerichtet ist.

5. Greifvorrichtung gemäß Anspruch 1, **dadurch gekennzeichnet, dass** die Dichtleiste (141 - 145) aus einem Elastomer oder einem Gummiwerkstoff gefertigt ist.

6. Greifvorrichtung gemäß Anspruch 1, **dadurch gekennzeichnet, dass** die Dichtleiste (142 - 145) mindestens eine Dichtlippe (151) aufweist.

7. Greifvorrichtung gemäß Anspruch 1, **dadurch gekennzeichnet, dass** die Dichtleiste (143, 145) an ihren Stirnseiten jeweils mindestens eine Stirndichtlippe (151) aufweist.

8. Greifvorrichtung gemäß Anspruch 1, **dadurch gekennzeichnet, dass** jede Auflauframpe (37, 38) eine gekrümmte Oberfläche hat, die die Form einer Zylindermantelteilfläche darstellt, wobei Letztere tangential aus der zugehörigen Führungsflanke (33, 34) hervorgeht.

9. Greifvorrichtung gemäß Anspruch 1, **dadurch gekennzeichnet, dass** an den ins Innere des Gehäuses (10) weisenden Stirnwänden (103) der Schlitten (100, 101) Auflauframpen (37) enden, deren Länge und deren maximale Keilspaltstärke größer sind als die Länge und die maximale Keilspaltstärke der restlichen Auflauframpen (38).

## Claims

1. A gripping device having slides (100, 101) bearing movable gripping elements (1, 2), wherein the slides (100, 101) are guided in a row, as seen in the gripping direction (9) of the gripping elements (1, 2), in a guide groove (20) parallel to the gripping direction (9) - between an opening position and a closing position
- which guide groove (20) is arranged in a main body (10) and is at least partially open to the gripping elements (1, 2), in such a manner that the slides (100, 101) can be driven via an actuator (120) and are supported on all sides transversely to the gripping direction (9),
- wherein a double sliding wedge member (51) coupling the slides (100, 101) is arranged between said slides, which double sliding wedge member (51) is articulated at a movable part of the actuator (120) such that the double sliding wedge member (51) is movable perpendicular to the gripping direction (9),
- wherein the guide groove (20) has one flat, precision-machined sealing zone (22) in the groove base (21) per slide (100, 101),
- wherein a sealing strip (141-145) is arranged at the underside (117) of each slide (100, 101), which sealing strip (141-145) seals the working lateral joint (30) between the respective slide (100, 101) and the guide groove (20),
- wherein each slide (100, 101) has two slide guide grooves (105) with two guide flanks (33, 34) each, and
- wherein each guide flank (33, 34) has leading ramps (37, 38) in the face end portions of the individual slide (100, 101), which leading ramps (37, 38) each provide a wedge gap (35) between the individual slide (100, 101) and the slide guide rails (31, 32) of the housing (10), which wedge gaps (35) widen toward the sled faces (103, 104).

2. The gripping device according to claim 1, **characterized in that** the sealing zone (22) has a width in the groove base (21), which width corresponds to the width of the groove base (21) and the length of which is greater than the slide travel.

3. The gripping device according to claim 1, **characterized in that** the individual slide (100, 101) has a sealing strip holding groove (110) on its underside (117) for accommodating a sealing strip (141-145).

4. The gripping device according to claim 1, **characterized in that** the sealing strip holding groove (110) is aligned transversely to the slide travel direction (9) .

5. The gripping device according to claim 1, **characterized in that** the sealing strip (141-145) is made of an elastomer or a rubber material.

6. The gripping device according to claim 1, **characterized in that** the sealing strip (142-145) has at least one sealing lip (151).

7. The gripping device according to claim 1, **characterized in that** the sealing strip (143, 145) has at least one face sealing lip (151) on each of its end faces.

8. The gripping device according to claim 1, **characterized in that** each leading ramp (37, 38) has a curved surface, which represents the shape of a partial cylindrical surface, wherein the latter emerges tangentially from the associated guide flank (33, 34).

9. The gripping device according to claim 1, **characterized in that** leading ramps (37) end at the end walls (103) of the slides (100, 101) pointing into the interior of the housing (10), the length and maximum wedge gap thickness of which leading ramps (37) are greater than the length and maximum wedge gap thickness of the remaining leading ramps (38).

## Revendications

1. Dispositif de préhension, pourvu de chariots (100, 101) portant des éléments de préhension (1, 2), les chariots (100, 101) étant guidés de manière à pouvoir être entraînés dans la direction de préhension (9) des éléments de préhension (1, 2), les uns derrière les autres dans une rainure de guidage (20) placée dans un corps de base (10), ouverte au moins par endroits vers les éléments de préhension (1, 2) vers la direction de préhension (9) - entre une position d'ouverture et une position de fermeture - par l'intermédiaire d'un actionneur (120) et étant logés en assurant un soutien de part et d'autre, à la transversale de la direction de préhension (9),
- entre les chariots (100, 101) étant placé un élément de calage à double coulissement (51) accouplant ces derniers, qui en étant déplaçable à la perpendiculaire de la direction de préhension (9) est articulé sur une partie mobile de l'actionneur (120),
- la rainure de guidage (20) comportant dans le fond de la rainure (21) pour chaque chariot (100, 101) une zone d'étanchéité (22) plane, usinée avec précision,
- sur chaque chariot (100, 101), sur la face inférieure (117) de celui-ci étant placée une baguette d'étanchéité (141 à 145) qui assure l'étanchéité du joint de construction auxiliaire (30) entre les chariots (100, 101) respectifs et la rainure de guidage (20),
- chaque chariot (100, 101) disposant de deux rainures de guidage de chariot (105) pourvues chacune de deux flancs de guidage (33, 34) et
- chaque flanc de guidage (33, 34) comportant sur les zones d'extrémité frontale du chariot (100, 101) individuel des rampes d'accostage (37, 38) dont chacune met à disposition - entre le chariot (100, 101) individuel et les coulisses de guidage des chariots (31, 32) du boîtier (10) - un interstice cunéiforme (35) s'élargissant en direction des faces frontales des chariots (103, 104) .

2. Dispositif de préhension selon la revendication 1, **caractérisé en ce que** la zone d'étanchéité (22) présente dans le fond de la rainure (21) une largeur qui correspond à la largeur du fond de la rainure (21) et dont la longueur est supérieure à la course du chariot.

3. Dispositif de préhension selon la revendication 1, **caractérisé en ce que** le chariot (100, 101) individuel comporte dans sa face inférieure (117) une rainure de retenue de la baguette d'étanchéité (110), destinée à réceptionner une baguette d'étanchéité (141 - 145).

4. Dispositif de préhension selon la revendication 1, **caractérisé en ce que** la rainure de retenue de la baguette d'étanchéité (110) est orientée à la transversale de la direction de déplacement du chariot (9).

5. Dispositif de préhension selon la revendication 1, **caractérisé en ce que** la baguette d'étanchéité (141 à 145) est fabriquée en un élastomère ou en une matière caoutchouteuse.

6. Dispositif de préhension selon la revendication 1, **caractérisé en ce que** la baguette d'étanchéité (142 à 145) comporte au moins une lèvre d'étanchéité (151).

7. Dispositif de préhension selon la revendication 1, **caractérisé en ce que** sur ses faces frontales, la baguette d'étanchéité (143, 145) comporte respectivement au moins une lèvre d'étanchéité frontale (151) .

8. Dispositif de préhension selon la revendication 1, **caractérisé en ce que** chaque rampe d'accostage (37, 38) dispose d'une surface curviligne qui représente la forme d'une surface partielle d'enveloppe cylindrique, cette dernière débordant de manière tangentielle hors du flanc de guidage (33, 34) associé.

9. Dispositif de préhension selon la revendication 1, **caractérisé en ce que** sur les parois frontales (103) des chariots (100, 101) dirigées vers l'intérieur du boîtier (10) se terminent des rampes d'accostage (37) dont la longueur et dont l'épaisseur maximale d'interstice cunéiforme sont supérieures à la longueur et à l'épaisseur maximale d'interstice cunéiforme du reste des rampes d'accostage (38).
